# FASCICULE DE BREVET EUROPEEN

(11) **EP 2 064 926 B1**
(45) Date de publication et mention de la délivrance du brevet: **11.11.2015**
(21) Numéro de dépôt: 07848217.1
(22) Date de dépôt: 11.09.2007
(51) Int. Cl.: H04L 29/12, H04L 12/403, H04L 12/46, H05B 37/02

(54) **PROCEDE ET DISPOSITIF POUR LA TRANSMISSION D'INFORMATIONS SUR UN RESEAU COMPLEXE,**
VERFAHREN UND VORRICHTUNG ZUR INFORMATIONSÜBERTRAGUNG ÜBER EIN KOMPLEXES NETZWERK
METHOD AND DEVICE FOR TRANSMITTING INFORMATION OVER A COMPLEX NETWORK

(30) Priorité: 14.09.2006 FR 0608059
(43) Date de publication de la demande: 03.06.2009
(73) Titulaire: Edelcom, 75012 Paris (FR)
(72) Inventeur: Duranton, René, F-03500 Contigny (FR)
(74) Mandataire: de la Bigne, Guillaume Michel Marie
(86) Numéro de dépôt international: PCT/FR2007/001464
(87) Numéro de publication internationale: WO 2008/031938

(56) Documents cités:
- EP-A1- 1 251 721
- EP-B1- 1 201 010
- US-A- 5 387 902
- US-A1- 2003 222 603
- PATERSON J H: "The development of a street lighting fault monitoring device" AUDIT COMMISSION RECOMMENDATIONS, 1991, pages 8-1, XP006522681

## Description

La présente invention concerne un procédé et un dispositif pour la transmission d'informations sur un réseau complexe.

Elle s'applique notamment, mais non exclusivement, à l'échange d'informations entre une pluralité de modules interconnectés par un réseau de distribution électrique utilisé à la fois pour l'alimentation électrique des modules et comme réseau de communication pour la transmission de messages numériques, entre modules par courant porteur modulé.

Elle convient plus particulièrement à la télécommande et à la télésurveillance des candélabres d'éclairage urbain.

Dans une application de ce type, on connecte sur le réseau un poste central de commande et une pluralité de modules électroniques afin :
- d'une part, d'offrir la possibilité de réaliser des télécommandes ou des téléparamétrages,
- d'autre part, de transmettre vers un poste central les informations détectées par ces modules électroniques.

Il s'avère qu'un réseau de distribution électrique présente généralement une topologie complexe comportant de nombreuses intersections réparties aléatoirement. En outre, la connaissance de la topologie exacte du réseau a bien souvent disparue, un tel réseau résultant généralement d'opérations d'installations successives effectuées sur plusieurs dizaines d'années.

Par ailleurs, la portée des transmissions par courant porteur est relativement faible. Il est donc nécessaire de répéter les messages transmis pour qu'ils arrivent jusqu'à leurs destinataires.

En particulier, le réseau de distribution d'électricité présente des impédances très variables en fonction du lieu et des usagers connectés sur ce même réseau.

En outre, les types de câbles utilisés (aériens, torsadés, enterrés, monophasés ou triphasés) varient très souvent en fonction des circonstances et les impédances linéiques propres à chaque type de câble sont également très variables.

Ainsi, par la technique des courants porteurs, en fonction des normes actuelles et dans la mesure où l'on désire transmettre des données sur un réseau électrique et sur une distance importante, il est indispensable de disposer d'un système de régénération des messages.

Du fait de la non maîtrise des impédances et des atténuations, il apparaît difficile de prévoir à l'avance quels seraient les modules susceptibles de réamplifier les messages.

Par ailleurs, si on souhaite pouvoir communiquer avec chaque module séparément, il est nécessaire d'attribuer une adresse propre à chaque module.

Dans le contexte d'un tel réseau, l'attribution d'une adresse à chaque module pose de nombreux problèmes.

En effet, il est d'abord nécessaire que le mode d'adressage des différents modules que l'on veut faire communiquer puisse s'appliquer à n'importe quelle topologie de réseau. Ensuite, si l'on souhaite interconnecter un nombre important de modules, l'adressage des modules doit pouvoir être effectué sans manipulations fastidieuses qui entraînent d'importants risques d'erreur. Il faut également pouvoir ajouter facilement un module dans le réseau sans que cela nécessite des interventions manuelles sur d'autres modules.

Par le brevet FR No 95 05749, on a déjà proposé un mode d'adressage nécessitant une action manuelle sur chaque module n'ayant pas encore d'adresse et sur le module pourvu d'une adresse, situé immédiatement en amont par rapport à une unité centrale située à la racine du réseau arborescent. L'adresse du module sans adresse est déterminée en fonction de l'adresse du module amont. Ce procédé présente donc l'inconvénient de nécessiter l'intervention d'opérateurs sur le terrain qui doivent agir sur des boutons de commande prévus sur chaque module.

Par le brevet FR No 00 01559, on a également proposé on procédé pour l'attribution automatique d'adresses selon lequel l'adresse de chaque module est déterminée à partir de l'adresse du module situé immédiatement en amont, cette adresse étant émise sur le réseau par le module amont dans un message d'attribution d'adresse. Ce procédé qui permet d'obtenir d'excellents résultats est cependant difficile à mettre en oeuvre et ne convient pas bien dans un réseau relativement complexe.

EP-1 201 010 divulgue au procédé de surveillance d'un réseau d'éclairage urbain mettant en oeuvre la transmission de messages par ondes radio. Il en est de même dans le document Paterson J H : "The developpement of a street lighting fault monitoring divice" Audit commission recommendations, 1991, pages 8-1 xP006522 681.

La demande de brevet EP-1 251 721 A1 présente également un procédé de surveilllance d'un réseau d'éclairage urbain mettant en oeuvre une radiotransmission de messages, avec répétition.

L'invention a donc plus particulièrement pour but de résoudre les problèmes précédemment évoqués et, en particulier, le problème de la régénération des messages transmis et le problème relatif à l'adressage des modules.

A cet effet, on prévoit selon l'invention un procédé selon la revendication 1.

On s'assure ainsi que le message est bien parvenu à son (ou à ses) destinataire(s).

Pour que le synchronisme des réémissions soit possible, il est indispensable, en dehors des interfaces technologiques d'amplification, que les systèmes de détection et d'émission des modules soient entièrement réalisés à partir d'un microprocesseur piloté par quartz ; un décodage de type analogique ne permettrait pas d'assurer une garantie suffisante sur le synchronisme des messages.

Ce synchronisme peut être assuré grâce à la vitesse de fonctionnement des microprocesseurs actuels (20 MHz et plus). Il est obtenu à partir de l'instant où le message est validé par le microprocesseur disposé dans chaque module.

Afin d'éviter tout problème de collision des messages, le déclenchement des transmissions de messages est activé soit par l'unité centrale ou soit par l'unité de zone UZ.

Le procédé précédemment décrit présente de multiples avantages. Il permet notamment :
- de modifier la structure du réseau électrique sans altérer la transmission,
- de rajouter de nouveaux modules sur un même réseau sans précaution particulière et sans aucune conséquence sur la transmission,
- de disposer des informations transmises en n'importe quel point du réseau de communication.

Un mode d'exécution de l'invention sera décrit ci-après, à titre d'exemple non limitatif, avec référence aux dessins annexés dans lesquels :
La figure 1 est une représentation schématique d'un réseau électrique de distribution de l'éclairage (public ou privé) sur lequel est mis en oeuvre le procédé selon l'invention ;
La figure 2 est un schéma-bloc illustrant l'architecture d'un module de commande et de contrôle des lampes d'éclairage utilisé dans le réseau représenté figure 1 ;
La figure 3 est un organigramme général de fonctionnement.

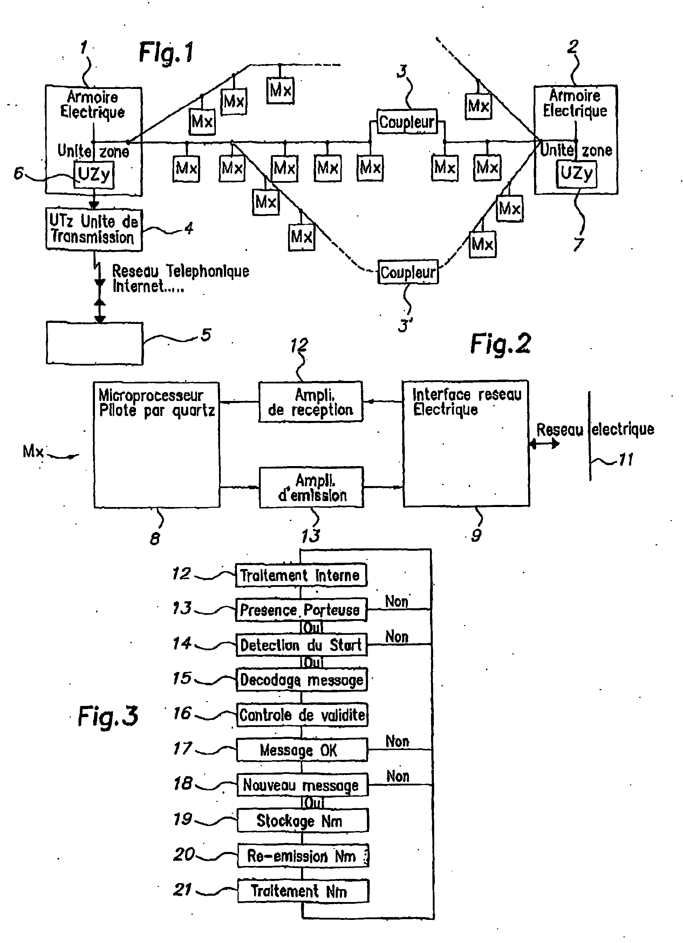

Dans l'exemple représenté sur la figure 1, le réseau électrique de distribution d'éclairage fait intervenir deux armoires électriques 1, 2 alimentant chacune les lampes d'éclairage dans une zone déterminée grâce à un réseau de distribution arborescent

Dans cet exemple, les réseaux arborescents des deux zones sont reliés entre eux par deux coupleurs 3 et 3' permettant la transmission des messages d'une zone vers une autre tout en laissant isolés les réseaux électriques.

Bien entendu, l'invention ne se limite pas à un nombre de coupleurs déterminé. L'ensemble des zones reliées par un ou plusieurs coupleurs est appelé secteur. Dans le cas où un même secteur comprend plusieurs coupleurs, en cas de défaillance de l'un des coupleurs, les autres coupleurs prennent le relais pour l'ensemble du secteur. Un secteur définit le réseau de transmission et est en général équipé d'une unité de transmission UT_{z} 4 identifiée par un numéro interne z qui est ici associé à l'armoire 1. Cette unité de transmission UT_{z} 4 peut émettre (ou recevoir) des informations, par exemple à destination (ou en provenance) d'un processeur distant 5 qui constitue un poste de contrôle PC, par l'intermédiaire du réseau téléphonique, du réseau Internet ou de tout autre réseau de transmission.

Par ailleurs, des unités de zone UZ 6, 7 identifiées par un numéro interne y sont installées dans les armoires 1,2.

La commande et le contrôle des lampes d'éclairage sont assurés par des modules de commande/contrôle Mₓ disposés sur les circuits d'alimentation des lampes, ces modules de commande/contrôle ayant un identifiant consistant en un numéro interne x.

Comme illustré figure 2, ces modules de commande/contrôle Mₓ comprennent un processeur 8 piloté par quartz relié à un interface réseau électrique 9 connecté au réseau électrique 11 par l'intermédiaire de deux circuits, à savoir :
- un circuit de réception 12 doté d'un amplificateur de réception,
- un circuit d'émission 13 doté d'un amplificateur d'émission.

Les sous-ensembles électroniques analogiques, notamment de l'interface réseau électrique 9 et des amplificateurs d'émission 13 et de réception 12 doivent mettre en oeuvre des composants suffisamment précis dans leurs tolérances afin d'éviter des rotations de phase différentes en fonction des fabrications.

La transmission des messages sur le réseau électrique peut être réalisée à partir d'une fréquence porteuse pure modulée en fréquence ou en phase. Chaque message peut être composé des éléments suivants :
- un préambule constitué par exemple par une porteuse indiquant un message à suivre,
- un numéro d'ordre du message,
- l'identification de la provenance du message grâce à l'identifiant du processeur distant 5, de l'unité de transmission 4, de l'unité de zone 6, 7 ou du module de commande/contrôle Mₓ,
- le numéro interne de l'émetteur,
- le numéro de la zone et, éventuellement, du départ,
- lé numéro du destinataire ou du groupe concerné (il peut s'agir de tous les modules de commande/contrôle Mₓ, d'un groupe défini de modules Mₓ ou même d'un seul module Mₓ),
- des données de consigne pouvant par exemple concerner le téléparamétrage, des taux de réduction, etc. ou même des données d'état d'un module de commande/contrôle Mₓ (ces données pouvant par exemple concerner des défauts de lampe, etc.),
- des données de contrôle du message suivant un algorithme prédéterminé.

Les modules de commande/contrôle sont conçus de manière à être en mesure d'exécuter des étapes de traitement internes de durées prédéterminées sur les signaux circulant sur le réseau en vue de pouvoir reconnaître et de pouvoir traiter les signaux "intéressants" pouvant les concerner.

Du fait que ces signaux intéressants sont transmis par modulation (par exemple de fréquence ou de phase) d'une porteuse, le temps de présence de cette porteuse doit être suffisant pour couvrir le temps du traitement interne.

La séquence opératoire exécutée par les modules de commande et de contrôle Mₓ, lors de l'émission sur le réseau, est illustrée sur la figure 3.

Elle comprend les phases opératoires suivantes ;
- Une phase d'exécution du traitement interne (bloc 12).
- Une phase de détection de la présence porteuse sur le réseau (bloc 13). Le but de cette phase est de reconnaître la bonne fréquence de la porteuse reçue, par exemple une fréquence de 130 KHz. Si aucune porteuse n'est détectée, le système retourne à la phase d'exécution du traitement interne 12. Si une porteuse à la bonne fréquence est détectée, le système passe à la phase suivante.
- Une phase de détection de la modulation de la porteuse (« start ») et du début du message (bloc 14). Si aucune modulation significative est détectée, le système retourne à la phase d'exécution du traitement interne 12, sinon il passe tout d'abord à une phase de décodage du message (bloc 15) puis à une phase de contrôle de validité (bloc 16).
- Une phase de validation du message (bloc 17). Le contrôle de validité du message est obtenu par l'application d'un algorithme de calcul sur les données reçues et par comparaison du résultat obtenu avec les données de contrôle contenues dans le message reçu. Si le message n'est pas validé, le système retourne à la phase d'exécution du traitement interne 12 sinon le système passe à la phase suivante.
- Une phase de détermination de l'existence ou non d'un nouveau message (bloc 18). Cette phase est réalisée par exemple avec comparaison avec le dernier message stocké par le module Mₓ. Si aucun nouveau n'est détecté, le système retourne à la phase d'exécution du traitement interne 12, sinon il passe à la phase suivante.
- Une phase de stockage du nouveau message Nm dans les mémoires du module (bloc 19).
- Une phase de réémissions du message sur le réseau (bloc 20). Cette phase est déclenchée après un laps de temps précis dont l'origine est déterminée par la fin du nouveau message.
- Une phase de traitement du nouveau message Nm (bloc 21) au terme de laquelle le système retourne à la phase de traitement interne 12.

Un avantage du procédé précédemment décrit consiste en ce qu'il permet de résoudre le problème de la communication entre les modules montés sur des lignes de distribution inultiphasées, les modules pouvant être disposés entre le neutre et différentes phases de la ligne.

En effet, dans ce cas, il se propage, par induction, un signal atténué sur les autres phases. Le processus de répétition de ce signal initialement atténué permet d'obtenir sur la ligne des signaux répétés de même amplitude que ceux de la phase sur laquelle le signal d'origine a été appliqué.

## Revendications

1. Procédé pour la transmission par courant porteur modulé d'un message sur un réseau de distribution d'énergie électrique sur lequel sont connectés une unité centrale ou une unité de zone (6, 7) ainsi qu'une pluralité de modules (Mₓ) de commande/contrôle susceptibles d'être concernés par ce message, la transmission ayant lieu via le réseau, le procédé comprenant au moins les étapes suivantes :
• l'attribution préalable, à chaque module (Mₓ), d'un identifiant tel que le numéro de série de fabrication du module (Mₓ) et, lors de l'installation de ce module (Mₓ) sur le réseau, l'association à cet identifiant de données relatives à la position géographique du lieu où ce module est installé, de manière à pouvoir ensuite repérer l'emplacement du module (Mₓ) à partir de son identifiant indépendamment de sa position dans le réseau,
• lors de l'émission sur le réseau d'un message à destination d'un module (Mₓ) et/ou de l'unité centrale, la reconnaissance et/ou la validation de ce message par les modules connectés au réseau qui sont aptes à recevoir le message et la répétition systématique et synchrone de ce message sur le réseau par les modules (Mₓ) ayant reconnu et/ou validés les messages, cette répétition des messages étant synchrone entre les modules et permettant à d'autres modules de devenir aptes à recevoir le message et, après reconnaissance et/ou validation, de réémettre à leur tour ce message, de sorte qu'à partir de chaque répétition, synchrone d'autres modules (Mₓ) comprennent le message et sont en mesure de procéder à une autre répétition, synchrone ce processus se répétant jusqu'à ce que le message soit transmis sur tout le réseau et que tous les modules (Mₓ) reçoivent et réémettent au moins une fois la message.

2. Procédé selon la revendication 1,
**caractérisé en ce que** les réémissions effectuées par les modules (Mₓ) s'effectuent de façon synchrone, et **en ce que** la synchronisation des réémissions est assurée grâce à la fréquence de fonctionnement de microprocesseurs pilotés par quartz équipant les susdits modules (Mₓ).

3. Procédé selon la revendication 2,
**caractérisé en ce que** le synchronisme des réémissions est obtenu à partir de l'instant où le message est validé par le microprocesseur (8) disposé dans chaque module (Mₓ).

4. Procédé selon l'une des revendications précédentes,
**caractérisé en ce que** le déclenchement des transmissions de messages est activé par l'unité centrale ou par une unité de zone (6, 7).

5. Procédé selon l'une des revendications précédentes,
**caractérisé en ce que** le susdit réseau est un réseau de distribution d'énergie électrique pour lampes d'éclairage public, et **en ce que** les susdits modules (Mₓ) sont des modules de commande/contrôle des lampes d'éclairage.

6. Procédé selon la revendication 5,
**caractérisé en ce que** les modules de commande/contrôle (Mₓ) comprennent un processeur (8) piloté par quartz relié à un interface réseau électrique (9) connecté au réseau électrique (11) par l'intermédiaire de deux circuits, à sevoir :
- un circuit de réception (12) doté d'un amplificateur de réception,
- un circuit d'émission (13) doté d'un amplificateur d'émission.

7. Procédé selon la revendication 5,
**caractérisé en ce que** le réseau électrique de distribution fait intervenir des armoires électriques (1, 2) alimentant chacune des lampes d'éclairage dans une zone déterminée grâce à un réseau de distribution arborescent, les réseaux arborescents des différentes zones pouvant être reliés entre eux par des coupleurs (3) permettant la transmission des messages d'une zone vers une autre tout en laissant isolés les réseaux électriques, l'ensemble des zones reliées par un ou plusieurs coupleurs (3) constituant un secteur équipé d'une unité de transmission identifiée par un numéro interne associé à l'armoire, cette unité de transmission pouvant communiquer avec un processeur distant (5), et **en ce que** chaque message est composé des éléments suivants :
- un préambule,
- un numéro d'ordre du message,
- l'identification de la provenance du message grâce à l'identifiant du processeur distant (5), de l'unité de transmission, de l'unité de zone ou du module de commande/contrôle,
- le numéro interne de l'émetteur,
- le numéro de la zone et, éventuellement, du départ,
- le numéro du destinataire ou du groupe concerné,
- des données de consigne,
- des données de contrôle du message selon un algorithme prédéterminé.

8. Procédé selon l'une des revendications précédentes,
**caractérisé en ce que** la séquence opératoire exécutée par les modules de contrôle et de commande comprend les opérations suivantes :
- une première phase (12) d'exécution d'un traitement interne,
- une deuxième phase (13) de détection de la présence porteuse sur le réseau avec retour à la première phase, en l'absence de porteuse sinon passagè à la troisième phase,
- une troisième phase (14) de détection de la modulation de la porteuse et du début du message avec retour à la première phase si aucune modulation significative n'est détectée sinon passage à une phase de décodage (15) du message puis à une phase de contrôle de validité (16) dudit message,
- une quatrième phase (17) de validation du message avec retour à la deuxième phase si le message n'est pas valide sinon passage à la phase suivante,
- une cinquième phase (18) de détermination de l'existence ou non d'un nouveau message avec retour à la première phase si aucun message n'est détecté sinon passage à la phase suivante,
- une sixième phase de stockage (19) du nouveau message (Nm) dans les mémoires du module,
- une septième phase (20) de réémission du message sur le réseau, cette étape étant déclenchée après un laps de temps précis dont l'origine est déterminée par la fin du nouveau message,
- une huitième phase de traitement du nouveau message (Nm 21).

## Patentansprüche

1. Verfahren zum Übertragen einer Nachricht durch modulierten Trägerstrom in einem Netz zur Verteilung elektrischer Energie, an das eine zentrale Einheit oder eine Zoneneinheit (6, 7) sowie eine Vielzahl von Steuerungs-/Kontrollmodulen (Mₓ) angeschlossen sind, die von dieser Nachricht betroffen sein können, wobei die Übertragung über das Netz erfolgt, wobei das Verfahren die folgenden Schritte umfasst:
- vorherige Zuweisung, zu jedem Modul (Mₓ), einer Kennung wie die Hersteller-Seriennummer des Moduls (Mₓ), und, bei der Installation dieses Moduls (Mₓ) im Netz, Zuweisung zu dieser Kennung von Daten über die geographische Position des Ortes, wo dieses Modul installiert ist, um anschließend den Einbauort des Moduls (Mₓ) ausgehend von seiner Kennung unabhängig von seiner Position im Netz orten zu können,
- bei der Versendung einer Nachricht im Netz an ein Modul (Mₓ) und/oder die zentrale Einheit Erkennung und/oder Validierung dieser Nachricht durch die am Netz angeschlossenen Module, die eingerichtet sind, um die Nachricht zu empfangen, und systematische und synchrone Wiederholung dieser Nachricht im Netz durch die Module (Mₓ), welche die Nachrichten erkannt und/oder validiert haben, wobei diese Wiederholung der Nachrichten zwischen den Modulen synchron ist und andere Modulen in die Lage versetzt, die Nachricht empfangen zu können und, nach Erkennung und/oder Validierung diese Nachricht weiterzusenden, damit andere Module (Mₓ) ausgehend von jeder synchronen Wiederholung diese Nachricht verstehen und in der Lage sind, eine weitere synchrone Wiederholung durchzuführen, wobei sich dieser Vorgang wiederholt, bis die Nachricht im gesamten Netz übertragen wurde und sämtliche Module (Mₓ) die Nachricht mindestens einmal empfangen und weitersenden.

2. Verfahren nach Anspruch 1,
**dadurch gekennzeichnet, dass** die durch die Module (Mₓ) durchgeführten Weitersendungen auf synchrone Weise erfolgen und dass die Synchronisierung der Weitersendungen durch die Betriebsfrequenz von Mikroprozessoren sichergestellt wird, die quarzgesteuert sind und mit denen die Module (Mₓ) versehen sind.

3. Verfahren nach Anspruch 2,
**dadurch gekennzeichnet, dass** der Synchronismus der Weitersendungen ausgehend von dem Zeitpunkt erhalten wird, wo die Nachricht vom Mikroprozessor (8) validiert wird, der in jedem Modul (Mₓ) angeordnet ist.

4. Verfahren nach einem der vorhergehenden Ansprüche,
**dadurch gekennzeichnet, dass** das Auslösen der Übertragungen von Nachrichten durch die zentrale Einheit und/oder durch eine Zoneneinheit (6, 7) aktiviert wird.

5. Verfahren nach einem der vorhergehenden Ansprüche,
**dadurch gekennzeichnet, dass** das Netz ein Netz zur Verteilung elektrischer Energie für Lampen der öffentlichen Beleuchtung ist und dass die Module (Mₓ) Module zur Steuerung/Kontrolle der Beleuchtungslampen sind.

6. Verfahren nach Anspruch 5,
**dadurch gekennzeichnet, dass** die Steuerungs-/Kontrollmodule (Mₓ) einen quarzgesteuerten Prozessor (8) umfassen, der mit einer Stromnetzschnittstelle (9) verbunden ist, die an das Stromnetz (11) mittels zwei Schaltungen anschlossen ist, nämlich:
- einer Empfangsschaltung (12), die mit einem Empfangsverstärker versehen ist,
- einer Sendeschaltung (13), die mit einem Sendeverstärker versehen ist.

7. Verfahren nach Anspruch 5,
**dadurch gekennzeichnet, dass** das Stromverteilungsnetz Schaltschränke (1, 2) einsetzt, die jede der Beleuchtungslampen in einer Zone versorgt, die über ein baumartiges Verteilungsnetz bestimmt wird, wobei die baumartigen Verteilungsnetze der verschiedenen Zonen durch Koppler (3) zur Übertragung der Nachrichten von einer Zone in eine andere Zone miteinander verbunden werden können, wobei die Stromnetze gleichzeitig getrennt belassen werden, wobei die Gesamtheit der Zonen, die durch einen oder mehrere Koppler (3) verbunden sind, einen Sektor bilden, der mit einer Übertragungseinheit versehen ist, die durch eine interne, dem Schaltschrank zugewiesene Nummer identifiziert ist, wobei diese Übertragungseinheit mit einem Fernprozessor (5) kommunizieren kann, und dass jede Nachricht aus den folgenden Elementen besteht:
- einer Präambel,
- einer Ordnungsnummer der Nachricht,
- der Identifizierung der Herkunft der Nachricht mit Hilfe der Kennung des Fernprozessors (5) der Übertragungseinheit, der Zoneneinheit und/oder des Steuerungs-/Kontrollmoduls,
- der internen Nummer des Senders,
- der Nummer der Zone und gegebenenfalls des Ausgangspunktes,
- der Nummer des Empfängers oder der betroffenen Gruppe,
- Solldaten,
- Daten zur Kontrolle der Nachricht gemäß einem vorbestimmten Algorithmus.

8. Verfahren nach einem der vorhergehenden Ansprüche,
**dadurch gekennzeichnet, dass** die von den Steuerungs- und Kontrollmodulen ausgeführte Betriebssequenz folgende Operationen umfasst:
- eine erste Phase (12) der Ausführung einer internen Verarbeitung,
- eine zweite Phase (13) der Erkennung der Trägerfrequenz im Netz mit Rückkehr zur ersten Phase bei Fehlen der Trägerfrequenz, andernfalls Übergang zur dritten Phase,
- eine dritte Phase (14) der Erkennung der Modulation der Trägerfrequenz und des Anfangs der Nachricht mit Rückkehr zur ersten Phase, wenn keine signifikante Modulation erkannt wurde, andernfalls Übergang zu einer Phase der Decodierung (15) der Nachricht und dann einer Phase der Kontrolle der Validität (16) der Nachricht,
- eine vierte Phase (17) der Validierung der Nachricht mit Rückkehr zur zweiten Phase, wenn die Nachricht nicht valide ist, andernfalls Übergang zur folgenden Phase,
- eine fünfte Phase (18) der Bestimmung des Vorhandenseins oder Nichtvorhandenseins einer neuen Nachricht mit Rückkehr zur ersten Phase, wenn keine Nachricht erkannt wurde, andernfalls Übergang zur folgenden Phase,
- eine sechste Phase (19) der Speicherung der neuen Nachricht (Nm) in den Speichern der Module,
- eine siebte Phase (20) der Weitersendung der Nachricht im Netz, wobei dieser Schritt nach einem Zeitraum ausgelöst wird, dessen Ursprung durch das Ende der neuen Nachricht bestimmt wird,
- eine achte Phase der Verarbeitung der neuen Nachricht (Nm 21).

## Claims

1. A method of transmitting a message by carrier current modulation over an electrical power distribution network having connected thereto a central unit or a zone unit (6, 7) together with a plurality of control/check modules (Mₓ) that might be concerned by the message, the transmitting taking place via the network, the method comprising at least the following steps:
• initially allocating to each module (Mₓ) an identifier such as the serial number of the manufacturer of the module (Mₓ), and on installing the module (Mₓ) in the network, associating said identifier with data relating to the geographical position of the location where the module is installed, so as to make it possible subsequently to identify the location of the module (Mₓ) from its identifier, independently of its position in the network; and
• when sending a message over the network to a module (Mₓ) and/or to the central unit, recognizing and/or validating the message in the modules that are connected to the network and that are suitable for receiving the message, and systematically and synchronously repeating the message over the network by means of those modules (Mₓ) that have recognized and/or validated the messages, this repetition of messages being synchronous between the modules enabling other modules to become able to receive the message, and after recognition and/or validation, of resending the message in turn, such that from each synchronous repetition, other modules (Mₓ) understand the message and are in a position to synchronously repeat it again, this process repeating until the message has been sent over the entire network and all of the modules (Mₓ) have received the message and retransmitted it at least once.

2. A method according to claim 1, **characterized in that** the modules (Mₓ) resend messages in synchronous manner, and **in that** the resending is synchronized by the operating frequency of crystal-clocked microprocessors forming part of said modules (Mₓ).

3. A method according to claim 2, **characterized in that** the resending of messages is synchronized on the basis of the instant at which the message is found to be valid by the microprocessor (8) located in each module (Mₓ).

4. A method according to any preceding claim, **characterized in that** message sending is triggered by the central unit or by a zone unit (6, 7).

5. A method according to any preceding claim, **characterized in that** said network is an electricity power distribution network for public lighting lamps, and **in that** said modules (Mₓ) are control/check modules of the lighting lamps.

6. A method according to claim 5, **characterized in that** the control/check modules (Mₓ) comprise a crystal-clocked processor (8) connected to an electricity network interface (9) that is connected to the electricity network (11) via two circuits, namely:
• a receive circuit (12) having a receive amplifier; and
• a second circuit (13) having a send amplifier.

7. A method according to claim 5, **characterized in that** the electricity distribution network makes use of electricity cabinets (1, 2), each powering lighting lamps in a determined zone via a distribution network of tree structure, the tree structure networks of different zones being capable of being interconnected by couplers (3) enabling messages to be sent from one zone to another while leaving the electricity networks mutually isolated, the set of zones connected together by one or more couplers (3) constituting a sector having a transmission unit identified by an internal number associated with the cabinets, said transmission unit being capable of communicating with a remote processor (5), and **in that** each message is made up of the following elements:
• a preamble;
• a message order number;
• the identity of the origin of the message relying on the identifier of the remote processor (5), of the transmission unit, of the zone unit, or of the control/check module;
• the internal number of the sender;
• the zone number and, optionally, the outgoing line number;
• the number of the destination or destination group concerned;
• setpoint data; and
• check data for checking the message using a predetermined algorithm.

8. A method according to any preceding claim, **characterized in that** the operating sequence executed by the check and control modules comprises the following operations:
• a first stage (12) of executing internal processing;
• a second stage (13) of detecting the presence of a carrier on the network, and returning to the first stage in the absence of a carrier, otherwise moving on to the third stage;
• a third stage (14) of detecting carrier modulation and the beginning of the message, returning to the first stage if no meaningful modulation is detected, otherwise moving on to a stage (15) of decoding the message and then on to a stage (16) of checking the validity of said message;
• a fourth stage (17) of validating the message and returning to the second stage if the message is not valid, otherwise moving on to the following stage;
• a fifth stage (18) of determining the existence or the absence of a new message, returning to the first stage if no message is detected, otherwise moving on to the next stage;
• a sixth stage (19) of storing the new message (Nm) in the memories of the module;
• a seventh stage (20) of resending the message over the network, this stage being triggered after an accurate time lapse from an origin determined by the end of the new message; and
• an eighth stage of processing the new message (Nm 21).
